# EUROPÄISCHE PATENTSCHRIFT

(11) **EP 3 433 298 B1**
(45) Veröffentlichungstag und Bekanntmachung des Hinweises auf die Patenterteilung: **17.06.2020**
(21) Anmeldenummer: 17711165.5
(22) Anmeldetag: 16.03.2017
(51) Int. Cl.: C08G 65/26, C08G 18/48, C08G 18/76, C08G 101/00, C08L 71/02, C08G 18/50

(54) **FLAMMGESCHÜTZTE ETHERWEICHSCHAUMSTOFFE**
FLAME RETARDANT ETHER SOFT FOAM SUBSTANCES
MOUSSE SOUPLE D'ETHER IGNIFUGE

(30) Priorität: 21.03.2016 EP 16161347
(43) Veröffentlichungstag der Anmeldung: 30.01.2019
(73) Patentinhaber: Covestro Deutschland AG, 51373 Leverkusen (DE)
(72) Erfinder: KLESCZEWSKI, Bert, 51069 Köln (DE); HOFMANN, Jörg, 47800 Krefeld (DE); NEFZGER, Hartmut, 50259 Pulheim (DE)
(74) Vertreter: Levpat
(86) Internationale Anmeldenummer: PCT/EP2017/056279
(87) Internationale Veröffentlichungsnummer: WO 2017/162520

(56) Entgegenhaltungen:
- EP-A1- 1 751 212
- DE-A1- 2 356 034
- US-A- 3 314 902
- US-A- 3 639 543

## Beschreibung

Die vorliegende Erfindung betrifft ein Verfahren zur Herstellung von mit Phosphor-haltigen Verbindungen gestarteten Poly(oxyalkylen)polyolen, welche einen inneren hoch EO-haltigen Block aufweisen, so wie die so erhältlichen Poly(oxyalkylen)polyole. Die vorliegende Erfindung umfasst weiterhin ein Verfahren zur Herstellung von Polyurethanschaumstoffen, vorzugsweise Polyurethanweichschaumstoffe, durch Reaktion einer Isocyanat-Komponente mit einer gegenüber Isocyanaten reaktiven Komponente, die mindestens ein mit Phosphor-haltigen Verbindungen gestartetes Poly(oxyalkylen)polyol mit einem inneren hoch EO-haltigen Block umfasst, die durch das erfindungsgemäße Verfahren hergestellte Polyurethanschaumstoffe und deren Verwendung.

US 3 314 902 A offenbart flammwidrige Polyurethanschäume, zu deren Herstellung Phosphor-haltige Polyetherpolyole eingesetzt werden, die auf Ethylenglykol basieren.

DE 23 56 034 A1 offenbart ein Phosphor-haltiges Flammschutzmittel mit einer ersten Struktureinheit basierend auf Ethylenoxid (EO) und einer daran angeknüpften, zweiten Struktureinheit basierend auf Propylenoxid.

Um die Brandsicherheit von Schaumstoffen zu erhöhen, ist es Standard bei der Herstellung der Schäume Flammschutzmittel zuzusetzen. Zugesetzte Flammschutzmittel führen jedoch häufig zu Problemen bei der Schäumung und zu Emissionen.

Seitens der Schaumstoff-produzierenden Industrie bestand daher der Wunsch, Weichschaumstoffe zu erhalten, die die einschlägigen Brandschutznormen (z.B. FMVSS 302) erfüllen, ohne dass zusätzlich Flammschutzmittel eingesetzt werden müssen.

Überraschenderweise wurde diese Aufgabe gelöst durch die Verwendung spezieller mit Phosphor-haltigen Säuren gestarteter Poly(oxyalkylen)polyole, die einen inneren hoch EO-haltigen Block umfassen, bei der Herstellung der Schäume. Diese Poly(oxyalkylen)polyole sind über ein spezielles Verfahren erhältlich.

Gegenstand der Erfindung ist daher ein Verfahren zur Herstellung von Poly(oxyalkylen)polyolen, wobei zunächst in einem ersten Schritt
A)
   i) wenigstens eine Phosphor-haltige Verbindung mit wenigstens einer Hydroxylgruppe, oder
   ii) eine Mischung aus wenigstens einer Phosphor-haltigen, wenigstens eine Hydroxylgruppe-aufweisenden Verbindung mit wenigstens einer H-funktionellen Starterverbindung, mit
B) einer Alkylenoxidkomponente, umfassend:
   i) ≥ 50 bis ≤ 100 Gewichts-% Ethylenoxid und
   ii) ≥ 0 bis ≤ 50 Gewichts-% anderer Alkylenoxide als Ethylenoxid umgesetzt werden, und das aus dem ersten Schritt erhaltene Produkt dann unter DMC-Katalyse mit
C) einer Alkylenoxidkomponente, umfassend:
   i) ≥ 0 bis ≤ 25 Gewichts-% Ethylenoxid und
   ii) ≥ 75 bis ≤ 100 Gewichts-% anderer Alkylenoxide als Ethylenoxid und
D) gegebenenfalls Kohlendioxid
umgesetzt wird.

Unter "H-funktionell" wird im Sinne der Erfindung eine Starterverbindung verstanden, die gegenüber Alkoxylierung aktive H-Atome aufweist.

Gegenstände der vorliegenden Erfindung sind ebenfalls die aus dem erfindungsgemäßen Verfahren erhältlichen Poly(oxyalkylen)polyole.

Unter "Poly(oxyalkylen)polyolen" werden im Sinne der Erfindung Polyetherpolyole und Polyethercarbonatpolyole verstanden.

Aus EP1751212A1 ist die 2-stufige Synthese von Polyolen auf Basis von Phosphor-haltigen Startmolekülen bekannt. Allerdings erwähnt der Stand der Technik keine speziellen Epoxidzusammensetzungen für die einzelnen Stufen. In allen Beispielen wird zumindest in der 1. Stufe jeweils nur reines Propylenoxid eingesetzt.

Beschreibung des erfindungsgemäßen Verfahrens:

### Verfahrensschritt 1:

Im erfindungsgemäßen Verfahren kommen als Phosphor-haltige Verbindungen mit wenigstens einer Hydroxylgruppe (Komponente A) i)) Verbindungen zum Einsatz, die durch folgende Formel dargestellt werden können: 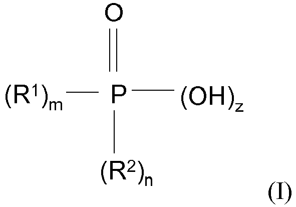 Dabei gilt:
z = eine ganze Zahl von 1 bis 3,
n = 0 oder 1,
m = 0 oder 1 und
z + m + n = 3.
R¹ und R² können gleich oder verschieden voneinander sein und stehen für
   i) -H
   ii) -P(O)(OH)₂
   iii) über ein C-Atom an den Phosphor gebundene, gesättigte oder ungesättigte, lineare oder verzweigte, aliphatische oder cycloaliphatische oder gegebenenfalls substituierte aromatische oder araliphatische Reste mit bis zu 10 Kohlenstoffatomen, die gegebenenfalls Heteroatome aus der Reihe Sauerstoff, Schwefel und Stickstoff enthalten,
      wobei lineare oder verzweigte, aliphatische Reste mit bis zu 10 Kohlenstoffatomen, die gegebenenfalls Heteroatome aus der Reihe Sauerstoff, Schwefel und Stickstoff enthalten, bevorzugt sind,
   iv) -OR³ oder -OC(O)R⁴, wobei R³ bzw. R⁴ für gesättigte oder ungesättigte, lineare oder verzweigte, aliphatische oder cycloaliphatische oder gegebenenfalls substituierte aromatische oder araliphatische Reste mit bis zu 10 Kohlenstoffatomen stehen, die gegebenenfalls Heteroatome aus der Reihe Sauerstoff, Schwefel und Stickstoff enthalten, und
      wobei lineare oder verzweigte, aliphatische Reste mit bis zu 10 Kohlenstoffatomen, die gegebenenfalls Heteroatome aus der Reihe Sauerstoff, Schwefel und Stickstoff enthalten, bevorzugt sind.

Desweiteren können durch Kondensation erhältliche, wenigstens eine Hydroxylgruppe aufweisende Oligomere und/oder Polymere jedweder der oben genannten Verbindungen im erfindungsgemäßen Verfahren als Starterverbindungen eingesetzt werden. Es kann sich dabei um Kondensate nur einer Verbindung, als auch um Mischkondensate handeln. Die Oligomere bzw. Polymere können lineare, verzweigte oder Ring-förmige Strukturen aufweisen.

Beispielhaft seien die folgenden Verbindungen genannt: Phosphorsäure, Phosphonsäure (phosphorige Säure), Phosphinsäure, Pyrophosphorsäure (Diphosphorsäure), Diphosphonsäure, Polyphosphor- und Polyphosphonsäuren, wie z.B. Tripolyphosphorsäure bzw. -phosphonsäure, Tetrapolyphosphorsäure bzw. -phosphonsäure, Tri- oder Tetrametaphosphorsäure, Hypodiphosphorsäure, Ester von jedweden dieser Verbindungen und/oder weitere Oligomere oder Polymere dieser Verbindungen.

Die beschriebenen Phosphor-haltigen Verbindungen können einzeln, als auch als Gemische eingesetzt werden.

Bevorzugt weisen die Phosphor-haltigen Verbindungen wenigsten 2 OH-Gruppen auf.

Bevorzugt wird Phosphorsäure, Phosphonsäure, Pyrophosphorsäure (Diphosphorsäure), Diphosphonsäure, Tripolyphosphorsäure, Tripolyphosphonsäure, Tetrapolyphosphorsäure, Tetrapolyphosphonsäure, Tri- und/oder Tetrametaphosphorsäure, besonders bevorzugt wird Phosphorsäure als Starter eingesetzt.

Diese Verbindungen können in Abmischung mit Wasser eingesetzt werden. Solche Abmischungen fallen unter Komponente A) ii), welche nachfolgend beschrieben wird.
Bevorzugt wird 100-prozentige Phosphorsäure (Komponente A) i)) oder 85-prozentige Phosphorsäure (Komponente A) ii)) eingesetzt.

Den Phosphor-haltigen Verbindungen können weitere Starterverbindungen zugesetzt werden (A) ii)). Dabei handelt es sich um H-funktionelle Verbindungen mit einer durchschnittlichen H-Funktionalität von ≥ 1 bis ≤ 6, bevorzugt von ≥ 1 und ≤ 4, besonders bevorzugt ≥ 2 und ≤ 3. Unter "H-funktionell" wird im Sinne der Erfindung eine Starterverbindung verstanden, die gegenüber Alkoxylierung aktive H-Atome aufweist.

Als geeignete H-funktionelle Starterverbindungen können Verbindungen mit für die Alkoxylierung aktiven H-Atomen eingesetzt werden. Für die Alkoxylierung aktive Gruppen mit aktiven H-Atomen sind beispielsweise -OH, -NH₂ (primäre Amine), -NH- (sekundäre Amine), -SH und - CO₂H, bevorzugt sind -OH und -NH₂, besonders bevorzugt ist -OH. Als H-funktionelle Startersubstanz wird beispielsweise eine oder mehrere Verbindungen ausgewählt aus der Gruppe bestehend aus Wasser, ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C₁-C₂₄ Alkyl-Fettsäureester, die im Mittel mindestens 2 OH-Gruppen pro Molekül enthalten, eingesetzt. Beispielhaft handelt es sich bei den C₁-C₂₄ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, t-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-t-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, t-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton. In Mischungen von H-funktionellen Starterverbindungen können auch dreiwertige Alkohole, wie beispielsweise Trimethylolpropan, Glycerin, Trishydroxyethylisocyanurat und Rizinusöl eingesetzt werden.

Die H-funktionellen Starterverbindungen können auch aus der Substanzklasse der Polyetherpolyole ausgewählt sein, insbesondere solchen mit einem Molekulargewicht Mₙ im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht Mₙ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Poly(oxyalkylen)polyole dienen können. Falls Polyetherpolyole zur Herstellung der Polyesteretherpolyole eingesetzt werden, sind Polyetherpolyole mit einem zahlenmittleren Molekulargewicht Mₙ von 150 bis 2000 g/mol bevorzugt.

Des Weiteren können als H-funktionelle Starterverbindungen Polycarbonatpolyole (wie beispielsweise Polycarbonatdiole) eingesetzt werden, insbesondere solchen mit einem Molekulargewicht Mₙ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200. Ebenfalls können Polyethercarbonatpolyole als H-funktionelle Starterverbindungen eingesetzt werden.

Bevorzugte H-funktionelle Starterverbindungen sind Wasser und Alkohole der allgemeinen Formel (II),

HO-(CH₂)ₓ-OH (II)

wobei x eine Zahl von 1 bis 20, bevorzugt eine gerade Zahl von 2 bis 20 ist. Beispiele für Alkohole gemäß Formel (II) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (II) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Starterverbindungen um eine oder mehrere Verbindungen ausgewählt aus der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindungen und Propylenoxid bzw. einer di- oder tri-H-funktionellen Starterverbindungen, Propylenoxid und Ethylenoxid aufgebaut ist. Die Polyetherpolyole haben bevorzugt ein zahlenmittleres Molekulargewicht Mₙ im Bereich von 62 bis 4500 g/mol und insbesondere ein zahlenmittleres Molekulargewicht Mₙ im Bereich von 62 bis 3000 g/mol, ganz besonders bevorzugt ein Molekulargewicht von 62 bis 1500 g/mol. Bevorzugt haben die Polyetherpolyole eine Funktionalität von ≥ 2 bis ≤ 3.

Werden die Phosphor-haltigen Verbindungen in Mischung mit H-funktionellen Starterverbindungen eingesetzt, so beträgt der Anteil der H-funktionellen Starterverbindungen in der Mischung max. 50 Gew.-%, bevorzugt max. 30 Gew.-%.

Wie bereits oben beschrieben wird bevorzugt Phosphorsäure als Phosphor-haltige Verbindung eingesetzt. Besonders bevorzugt wird sie als 100-prozentige Phosphorsäure (Komponente A) i)) oder in Abmischung mit Wasser als 85-prozentige Phosphorsäure (Komponente A) ii)) eingesetzt.

Wird 85 %-ige Phosphorsäure eingesetzt, so ist es bevorzugt diese mit wenigstens einer weiteren H-funktionellen Starterverbindung zu mischen. Bevorzugt handelt es sich bei dieser weiteren H-funktionellen Starterverbindung um einen Alkohol.

Gemäß dem erfindungsgemäßen Verfahren wird die Starter-Verbindung bzw. Mischung (A) in einem ersten Schritt mit
B) einer Alkylenoxidkomponente, umfassend:
i) ≥ 50 bis ≤ 100 Gewichts-% Ethylenoxid und
ii) ≥ 0 bis ≤ 50 Gewichts-% anderer Alkylenoxide als Ethylenoxid
umgesetzt.

Vorzugsweise wird reines Ethylenoxid mit der Starterverbindung bzw. der Startermischung umgesetzt.

Wird eine Mischung aus Ethylenoxid mit anderen Alkylenoxiden verwendet, so enthält die Mischung ≥ 50 Gewichts-%, bevorzugt ≥ 80 Gewichts-%, besonders bevorzugt ≥ 90 Gewichts-% Ethylenoxid.

Als in Mischung mit dem Ethylenoxid einzusetzende Alkylenoxide (Epoxide) kommen solche mit 3 bis 24 Kohlenstoffatomen zum Einsatz. Bei den Alkylenoxiden mit 3 bis 24 Kohlenstoffatomen handelt es sich beispielsweise um eine oder mehrere Verbindungen ausgewählt aus der Gruppe bestehend aus Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden Propylenoxid und/oder 1,2 Butylenoxid, besonders bevorzugt Propylenoxid in Mischung mit dem Ethylenoxid eingesetzt.

In einer bevorzugten Ausführungsform umfasst
B)
i) ≥ 50 bis ≤ 100 Gewichts-% Ethylenoxid und
ii) ≥ 0 bis ≤ 50 Gewichts-% anderer Alkylenoxide als Ethylenoxid, bevorzugt Propylenoxid und/oder 1,2 Butylenoxid, besonders bevorzugt Propylenoxid.

In einer besonders bevorzugten Ausführungsform umfasst
B)
i) ≥ 80 bis ≤ 100 Gewichts-% Ethylenoxid und
ii) ≥ 0 bis ≤ 20 Gewichts-% anderer Alkylenoxide als Ethylenoxid, bevorzugt Propylenoxid und/oder 1,2 Butylenoxid, besonders bevorzugt Propylenoxid.

In einer ganz besonders bevorzugten Ausführungsform umfasst
B)
i) ≥ 90 bis ≤ 100 Gewichts-% Ethylenoxid und
ii) ≥ 0 bis ≤ 10 Gewichts-% anderer Alkylenoxide als Ethylenoxid, bevorzugt Propylenoxid und/oder 1,2 Butylenoxid, besonders bevorzugt Propylenoxid.

In einer noch mehr bevorzugten Ausführungsform umfasst
B) 100 Gewichts-% Ethylenoxid.

Bei der Umsetzung der Phosphor-haltigen Starter bzw. der Abmischung aus Phosphor-haltigen und H-funktionellen Starterverbindungen (A) mit der Alkylenoxidkomponente (B) beträgt das Molverhältnis der Komponente (B) zu Hydroxylgruppen der Komponente (A) 1 bis 8 : 1, bevorzugt 2 bis 5 : 1.

Verfahrensschritt 1 kann in Gegenwart oder in Abwesenheit eines die Alkoxylierungsreaktion katalysierenden Katalysators durchgeführt werden. Bevorzugt wird Verfahrensschritt 1 ohne Katalysator durchgeführt.

DMC-Katalysatoren können **nicht** in Verfahrensschritt 1 verwendet werden.
Bei den möglicherweise in Verfahrensschritt 1 zu verwendenden Katalysatoren handelt es sich insbesondere um saure bzw. lewis-saure Katalysatoren, wie beispielsweise BF₃, BF₃-Etherat, SbF₅, PF₅, Yttrium- oder Aluminiumtriflat, HBF₄, Trifluormethansulfonsäure oder Perchlorsäure.

Verfahrensschritt 1 kann in Gegenwart oder bei Abwesenheit eines inerten Lösungsmittels ausgeführt werden. Geeignete Lösungsmittel sind beispielsweise Heptan, Cyclohexan, Toluol, Xylol, Diethylether, Dimethoxyethan oder chlorierter Kohlenwasserstoff, wie z.B. Methylenchlorid, Chloroform oder 1,2-Dichlorpropan. Das Lösemittel, sofern verwendet, wird im Allgemeinen in einer Menge von 10 bis 30 Gew.-% bezogen auf die Gesamtmenge des Reaktionsgemisches eingesetzt.

Verfahrensschritt 1 wird bei Temperaturen von 0 bis 200°C, bevorzugt 20 bis 180°C, besonders bevorzugt 40 bis 150 °C durchgeführt.

### Verfahrensschritt 2:

Gemäß dem erfindungsgemäßen Verfahren wird das aus Schritt 1 erhaltene Produkt unter DMC-Katalyse mit
C) einer Alkylenoxidkomponente, umfassend
i) ≥ 0 bis ≤ 25 Gewichts-% Ethylenoxid und
ii) ≥ 75 bis ≤ 100 Gewichts-% anderer Alkylenoxide als Ethylenoxid
umgesetzt.

Bezüglich der zu verwendenden Alkylenoxide wird auf die Ausführungen unter Verfahrensschritt 1 verwiesen. Bevorzugt wird in Komponente (C ii) Propylenoxid und/oder 1,2 Butylenoxid, besonders bevorzugt Propylenoxid als "anderes Alkylenoxid" eingesetzt.

Bevorzugt werden ≥ 85 Gewichts-%, besonders bevorzugt ≥ 90 Gewichts-% anderer Alkylenoxide als Ethylenoxid in (C ii) eingesetzt.

In einer bevorzugten Ausführungsform umfasst
C)
i) ≥ 0 bis ≤ 25 Gewichts-% Ethylenoxid und
ii) ≥ 75 bis ≤ 100 Gewichts-% anderer Alkylenoxide als Ethylenoxid, bevorzugt Propylenoxid und/oder 1,2 Butylenoxid, besonders bevorzugt Propylenoxid.

In einer besonders bevorzugten Ausführungsform umfasst
C)
i) ≥ 0 bis ≤ 15 Gewichts-% Ethylenoxid und
ii) ≥ 85 bis ≤ 100 Gewichts-% anderer Alkylenoxide als Ethylenoxid, bevorzugt Propylenoxid und/oder 1,2 Butylenoxid, besonders bevorzugt Propylenoxid.

In einer ganz besonders bevorzugten Ausführungsform umfasst
C)
i) ≥ 0 bis ≤ 10 Gewichts-% Ethylenoxid und
ii) ≥ 90 bis ≤ 100 Gewichts-% anderer Alkylenoxide als Ethylenoxid, bevorzugt Propylenoxid und/oder 1,2 Butylenoxid, besonders bevorzugt Propylenoxid.

Bei der Umsetzung des Produkts aus Verfahrensschritt 1 mit der Alkylenoxidkomponente (C) beträgt das Molverhältnis der Komponente (C) zu Hydroxylgruppen des Produkts aus Schritt 1 5 bis 30 : 1, bevorzugt 10 bis 20 : 1.

Die Umsetzung des Produkts aus Verfahrensschritt 1 mit (C) kann in Gegenwart von Kohlendioxid (D) als Co-Monomer erfolgen. Das Gewichtsverhältnis der Alkylenoxidkomponente (C) zu Kohlendioxid beträgt dabei bevorzugt 49 bis 2,3:1.

Das entstehende Polyethercarbonatpolyol weist vorzugsweise einen Gehalt an Carbonatgruppen ("aus Kohlendioxid stammenden Einheiten"), berechnet als CO₂, von ≥ 2,0 und ≤ 30,0 Gew.-%, bevorzugt von ≥ 5,0 und ≤ 28,0 Gew.-% und besonders bevorzugt von ≥ 10,0 und ≤ 25,0 Gew.-% auf.

Die Umsetzung des Produkts aus Schritt 1 mit Komponente (C) und gegebenenfalls Kohlendioxid (D) erfolgt unter Verwendung von Doppelmetallcyanid-Katalysatoren (DMC-Katalysatoren).

DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. t.-Butanol) noch einen Polyether mit einem zahlenmittlerem Molekulargewicht Mₙ größer als 500 g/mol enthalten.

Der DMC-Katalysator wird zumeist in einer Menge von ≤ 500 ppm, bevorzugt in einer Menge von ≥ 10 bis ≤ 200 ppm, besonders bevorzugt in einer Menge von ≥ 15 bis ≤ 150 ppm und insbesondere in einer Menge von ≥ 20 bis ≤ 120 ppm, jeweils bezogen auf das Gewicht des aus Verfahrensschritt 2 erhältlichen Polyether- bzw. Polyethercarbonatpolyols eingesetzt.

Jeder der Verfahrensschritte 1 und/oder 2 kann in Gegenwart oder bei Abwesenheit eines inerten Lösungsmittels ausgeführt werden. Geeignete Lösungsmittel sind beispielsweise Heptan, Cyclohexan, Toluol, Xylol, Diethylether, Dimethoxyethan oder chlorierter Kohlenwasserstoff, wie z.B. Methylenchlorid, Chloroform oder 1,2-Dichlorpropan. Das Lösemittel, sofern verwendet, wird im Allgemeinen in einer Menge von 10 bis 30 Gew.-% bezogen auf die Gesamtmenge des Reaktionsgemisches eingesetzt.

Verfahrensschritt 2 kann in Gegenwart oder bei Abwesenheit eines inerten Lösungsmittels ausgeführt werden. Geeignete Lösungsmittel sind beispielsweise Heptan, Cyclohexan, Toluol, Xylol, Diethylether, Dimethoxyethan oder chlorierter Kohlenwasserstoff, wie z.B. Methylenchlorid, Chloroform oder 1,2-Dichlorpropan. Das Lösemittel, sofern verwendet, wird im Allgemeinen in einer Menge von 10 bis 30 Gew.-% bezogen auf die Gesamtmenge des Reaktionsgemisches eingesetzt.

Verfahrensschritt 2 wird bei Temperaturen von 0 bis 200°C, bevorzugt 20 bis 180°C, besonders bevorzugt 40 bis 160 °C durchgeführt.
Wie bereits zuvor beschrieben sind weitere Gegenstände der vorliegenden Erfindung die aus dem erfindungsgemäßen Verfahren erhältlichen Poly(oxyalkylen)polyole.

Diese weisen Hydroxylzahlen gemäß DIN 53240 von ≥ 20 mg KOH/g bis ≤ 130 mg KOH/g, vorzugsweise von ≥ 26 g KOH/g bis ≤ 90 mg KOH/g auf.

Ein Gegenstand der vorliegenden Erfindung ist auch die Verwendung der aus dem erfindungsgemäßen Verfahren erhältlichen Poly(oxyalkylen)polyole zur Herstellung von Polyurethanschaumstoffen, bevorzugt Polyurethanweichschaumstoffen.

Darüber hinaus ist ein Gegenstand der vorliegenden Erfindung ein Verfahren zur Herstellung von Polyurethanschaumstoffen, vorzugsweise Polyurethanweichschaumstoffen, durch Umsetzung von
Komponente E enthaltend mindestens ein Poly(oxyalkylen)polyol, erhältlich gemäß dem vorstehend beschriebenen Verfahren (Komponente E1),
F gegebenenfalls
   F1) Katalysatoren und/oder
   F2) Hilfs- und Zusatzstoffen,
G Wasser und/oder physikalischen Treibmitteln,
   mit
H Di und/oder Polyisocyanaten,
   wobei die Herstellung bei einer Kennzahl von ≥ 90 bis ≤ 120 erfolgt.

Vorzugsweise weisen die in diesem Verfahren einzusetzenden Poly(oxyalkylen)polyole (Komponente E1) Hydroxylzahlen gemäß DIN 53240 von ≥ 20 mg KOH/g bis ≤ 130 mg KOH/g, vorzugsweise von ≥ 26 mg KOH/g bis ≤ 90 mg KOH/g auf.

Bevorzugter Gegenstand ist ein Verfahren zur Herstellung von Polyurethanschaumstoffen, vorzugsweise Polyurethanweichschaumstoffen, durch Umsetzung von
E1 ≥ 20 bis ≤ 100 Gew.-Teilen, vorzugsweise ≥ 40 bis ≤ 100 Gew.-Teilen mindestens eines Poly(oxyalkylen)polyols, welches erhältlich ist gemäß dem vorstehend beschriebenen Verfahren und Hydroxylzahlen gemäß DIN 53240 von ≥ 20 mg KOH/g bis ≤ 130 mg KOH/g aufweist,
E2 ≤ 80 bis ≥ 0 Gew.-Teilen, bevorzugt von ≤ 60 bis ≥ 0 Gew.-Teilen mindestens eines Poly(oxyalkylen)polyols, welches Hydroxylzahlen gemäß DIN 53240 von ≥ 20 mg KOH/g bis ≤ 130 mg KOH/g aufweist und nicht unter die Definition der Komponente E1 fällt,
E3 ≤ 50 bis ≥ 0 Gew.-Teilen, bezogen auf die Summe der Gewichtsteile der Komponente E1 und E2, mindestens einer gegenüber Isocyanaten reaktionsfähige Gruppen aufweisende Verbindung, die nicht unter die Definition der Komponenten E1 oder E2 fällt,
F gegebenenfalls
   F1) Katalysatoren und/oder
   F2) Hilfs- und Zusatzstoffen,
G Wasser und/oder physikalischen Treibmitteln,
   mit
H Di und/oder Polyisocyanaten,
wobei die Herstellung bei einer Kennzahl von ≥ 90 bis ≤ 120 erfolgt und wobei die Summe der Gewichtsteile E1 + E2 in der Zusammensetzung 100 Gewichtsteile ergibt.

Weitere Gegenstände sind Verfahren gemäß den beiden zuletzt beschriebenen Verfahren, wobei jedoch neben den Komponenten E1, bzw. E1 bis E3 keine weiteren Polyolkomponenten in der Zusammensetzung enthalten sind.

Die Komponenten E1 bis E3 beziehen sich jeweils auf "mindestens eine" der genannten Verbindungen. Bei Verwendung mehrerer Verbindungen einer Komponente entspricht die Mengenangabe der Summe der Gewichtsteile der Verbindungen.

### Komponente E2:

Komponente E2 umfasst Poly(oxyalkylen)polyole, welche Hydroxylzahlen gemäß DIN 53240 von ≥ 20 mg KOH/g bis ≤ 130 mg KOH/g, bevorzugt ≥ 26 mg KOH/g bis ≤ 90 mg KOH/g aufweisen und nicht unter die Definition der Komponente E1 fallen.

Analog Komponente E1 können diese durch Addition von Alkylenoxiden bzw. Alkylenoxiden und Kohlendioxid an H-funktionelle Starterverbindungen erhalten werden.

Allgemein können zur Herstellung der Komponente E2 Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid, besonders bevorzugt Ethylenoxid und/oder Propylenoxid eingesetzt.

Als H-funktionelle Starterverbindungen können die gleichen Verbindungen eingesetzt werden, wie unter Komponente A beschrieben, d.h. Phosphor-haltige Verbindungen gemäß Beschreibung der Komponente A) i) und/oder andere H-funktionelle Starterverbindungen gemäß Beschreibung der Komponente A) ii). Die Verwendung der H-funktionellen Starterverbindungen in Komponente A ist unabhängig von der Verwendung der H-funktionellen Starterverbindungen zur Herstellung der Komponente E2.

Werden Phosphor-haltige Verbindungen (E2.1) als Starterverbindungen zur Herstellung der Komponente E2 verwendet, so ist es auch hier bevorzugt Phosphorsäure, Phosphonsäure, Pyrophosphorsäure (Diphosphorsäure), Diphosphonsäure, Tripolyphosphorsäure, Tripolyphosphonsäure, Tetrapolyphosphorsäure, Tetrapolyphosphonsäure, Tri- und/oder Tetrametaphosphorsäure einzusetzen. Besonders bevorzugt wird Phosphorsäure, ganz besonders bevorzugt 100 prozentige Phosphorsäure oder 85-prozentige Phosphorsäure eingesetzt.

Werden andere H-funktionelle Starterverbindungen (E2.2) als Starterverbindungen eingesetzt, so handelt es sich bevorzugt um Alkohole der allgemeinen Formel (II),

HO-(CH₂)ₓ-OH (II)

wobei x eine Zahl von 1 bis 20, bevorzugt eine gerade Zahl von 2 bis 20 ist. Beispiele für Alkohole gemäß Formel (II) sind Ethylenglycol, 1,4-Butandiol, 1,6-Hexandiol, 1,8-Octandiol, 1,10 Decandiol und 1,12-Dodecandiol. Weitere bevorzugt sind Neopentylglykol, Trimethylolpropan, Glycerin, Pentaerythrit, Umsetzungsprodukte der Alkohole gemäß Formel (II) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden Wasser, Diethylenglykol, Dipropylenglykol, Rizinusöl, Sorbit und Polyetherpolyole, aufgebaut aus sich wiederholenden Polyalkylenoxideinheiten, eingesetzt. Besonders bevorzugt handelt es sich um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt ein zahlenmittleres Molekulargewicht Mₙ im Bereich von 62 bis 4500 g/mol und insbesondere ein zahlenmittleres Molekulargewicht Mₙ im Bereich von 62 bis 3000 g/mol, ganz besonders bevorzugt ein Molekulargewicht von 62 bis 1500 g/mol. Bevorzugt haben die Polyetherpolyole eine Funktionalität von ≥ 2 bis ≤ 3.

Es können auch Mischungen der Phosphor-haltigen Verbindungen E2.1 mit anderen H-funktionellen Starterverbindungen E2.2 eingesetzt werden.

Bevorzugt werden H-funktionelle Starterverbindungen E2.2 und keine Phosphor-haltigen Starterverbindungen E2.1 eingesetzt.

Gegenstand der vorliegenden Erfindung ist daher auch ein Verfahren zur Herstellung von Polyurethanschaumstoffen, vorzugsweise Polyurethanweichschaumstoffen, durch Umsetzung von
Komponente E enthaltend mindestens ein Poly(oxyalkylen)polyol, erhältlich gemäß dem anfänglich beschriebenen Verfahren (Komponente E1), sowie mindestens ein Poly(oxyalkylen)polyol, das **nicht unter Verwendung von Phosphor-haltigen Verbindungen** hergestellt wurde (Komponente E2),
F gegebenenfalls
   F1) Katalysatoren und/oder,
   F2) Hilfs- und Zusatzstoffen
G Wasser und/oder physikalischen Treibmitteln,
   mit
H Di und/oder Polyisocyanaten,
wobei die Herstellung bei einer Kennzahl von ≥ 90 bis ≤ 120 erfolgt.

Darüber hinaus ist ein Gegenstand der vorliegenden Erfindung ein Verfahren zur Herstellung von Polyurethanschaumstoffen, vorzugsweise Polyurethanweichschaumstoffen, durch Umsetzung von
E1 ≥ 20 bis < 100 Gew.-Teilen, vorzugsweise ≥ 40 bis < 100 Gew.-Teilen mindestens eines Poly(oxyalkylen)polyols, welches erhältlich ist gemäß dem vorstehend beschriebenen Verfahren und Hydroxylzahlen gemäß DIN 53240 von ≥ 20 mg KOH/g bis ≤ 130 mg KOH/g aufweist,
E2 ≤ 80 bis > 0 Gew.-Teilen, bevorzugt von ≤ 60 bis > 0 Gew.-Teilen mindestens eines Poly(oxyalkylen)polyols, welches Hydroxylzahlen gemäß DIN 53240 von ≥ 20 mg KOH/g bis ≤ 130 mg KOH/g aufweist und **nicht unter Verwendung von Phosphor-haltigen Verbindungen** hergestellt wurde,
E3 ≤ 50 bis ≥ 0 Gew.-Teilen, bezogen auf die Summe der Gewichtsteile der Komponente E1 und E2, mindestens einer gegenüber Isocyanaten reaktionsfähige Gruppen aufweisende Verbindung, die nicht unter die Definition der Komponenten E1 oder E2 fällt,
F gegebenenfalls
   F1) Katalysatoren und/oder,
   F2) Hilfs- und Zusatzstoffen
G Wasser und/oder physikalischen Treibmitteln,
   mit
H Di und/oder Polyisocyanaten,
wobei die Herstellung bei einer Kennzahl von ≥ 90 bis ≤ 120 erfolgt und wobei die Summe der Gewichtsteile E1 + E2 in der Zusammensetzung 100 Gewichtsteile ergibt.

Desweiteren ist ein Gegenstand der vorliegenden Erfindung ein Verfahren zur Herstellung von Polyurethanschaumstoffen, vorzugsweise Polyurethanweichschaumstoffen, durch Umsetzung von
E1 ≥ 20 bis < 100 Gew.-Teilen, vorzugsweise ≥ 40 bis < 100 Gew.-Teilen mindestens eines Poly(oxyalkylen)polyols, welches erhältlich ist gemäß dem vorstehend beschriebenen Verfahren und Hydroxylzahlen gemäß DIN 53240 von ≥ 20 mg KOH/g bis ≤ 130 mg KOH/g aufweist,
E2 ≤ 80 bis > 0 Gew.-Teilen, bevorzugt von ≤ 60 bis > 0 Gew.-Teilen mindestens eines Poly(oxyalkylen)polyols, welches Hydroxylzahlen gemäß DIN 53240 von ≥ 20 mg KOH/g bis ≤ 130 mg KOH/g aufweist und **nicht unter Verwendung von Phosphor-haltigen Verbindungen** hergestellt wurde,
E3 ≤ 50 bis ≥ 0 Gew.-Teilen, bezogen auf die Summe der Gewichtsteile der Komponente E1 und E2, mindestens einer gegenüber Isocyanaten reaktionsfähige Gruppen aufweisende Verbindung, die nicht unter die Definition der Komponenten E1 oder E2 fällt und die **nicht unter Verwendung von Phosphor-haltigen Verbindungen** hergestellt wurde,
F gegebenenfalls
   F1) Katalysatoren und/oder,
   F2) Hilfs- und Zusatzstoffen
G Wasser und/oder physikalischen Treibmitteln,
   mit
H Di und/oder Polyisocyanaten,
wobei die Herstellung bei einer Kennzahl von ≥ 90 bis ≤ 120 erfolgt und wobei die Summe der Gewichtsteile E1 + E2 in der Zusammensetzung 100 Gewichtsteile ergibt.

Weitere Gegenstände sind Verfahren gemäß den drei zuletzt beschriebenen Verfahren, wobei jedoch neben den Komponenten E1 und E2, bzw. E1 bis E3 keine weiteren Polyolkomponenten in der Zusammensetzung enthalten sind.

### Komponente E3:

Komponente E3 umfasst gegenüber Isocyanaten reaktionsfähige Gruppen aufweisende Verbindungen, die nicht unter die Definition der Komponenten E1 oder E2 fallen.

Dazu gehören alle dem Fachmann bekannten Polyhydroxyverbindungen, die nicht unter die Definition der Komponenten E1 oder E2 fallen, und bevorzugt eine mittlere OH-Funktionalität > 1,5 aufweisen.
Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit), Polyesterpolyole, Polythioetherpolyole, Polyacrylatpolyole, Polymerpolyole, PHD-Polyole und PIPA-Polyole sein.
- Polymerpolyole sind Polyole, die Anteile von durch radikalische Polymerisation geeigneter Monomere wie Styrol oder Acrylnitril in einem Basispolyol, wie z.B. einem Polyetherpolyol und/oder Polyethercabonatpolyol, erzeugten festen Polymeren enthalten.
- PHD (Polyharnstoffdipsersion)-Polyole werden beispielsweise hergestellt durch in situ Polymerisation eines Isocyanats oder einer Isocyanat-Mischung mit einem Diamin und/oder Hydrazin in einem Polyol, vorzugsweise einem Polyetherpolyol. Vorzugsweise wird die PHD-Dispersion hergestellt durch Umsetzung einer Isocyanat-Mischung eingesetzt aus einer Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol und/oder Polyethercarbonatpolyol, hergestellt durch Alkoxylierung eines trifunktionellen Starters (wie beispielsweise Glycerin und/oder Trimethylolpropan), im Falle des Polyethercarbonatpolyols in Gegenwart von Kohlendioxid. Verfahren zur Herstellung von PHD-Dispersionen sind beispielsweise beschrieben in US 4,089,835 und US 4,260,530.
- Bei den PIPA-Polyolen handelt es sich um durch Polyisocyanat-Polyaddition mit Alkanolaminenmodifizierte, vorzugsweise Triethanolamin-modifizierte Polyetherpolyole und/oder Polyethercarbonatpolyole, wobei das Polyether(carbonat)polyol eine Funktionalität von 2,5 bis 4 und eine Hydroxylzahl von ≥ 3 mg KOH/g bis ≤ 112 mg KOH/g (Molekulargewicht 500 bis 18000) aufweist. Vorzugsweise ist das Polyetherpolyol "EO-capped", d.h. das Polyetherpolyol besitzt terminale Ethylenoxidgruppen. PIPA-Polyole sind in GB 2 072 204 A, DE 31 03 757 A1 und US 4 374 209 A eingehend beschrieben.

Neben den Polyolen können als Komponente E3 z.B. auch Verbindungen mit Aminogruppen und/oder Thiolgruppen und/oder Carboxylgruppen eingesetzt werden. Diese Verbindungen weisen in der Regel 2 bis 8, vorzugsweise 2 bis 4, gegenüber Isocyanaten reaktionsfähige Wasserstoffatome auf. Beispielsweise können Ethanolamin, Diethanolamin und/oder Triethanolamin, eingesetzt werden. Weitere Beispiele werden in EP-A 0 007 502, Seiten 16 - 17, beschrieben.

### Komponente F

Als Komponente F werden gegebenenfalls
F1) Katalysatoren und/oder
F2) Hilfs- und Zusatzstoffe,
verwendet.

Als Katalysatoren F1 werden bevorzugt eingesetzt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff).

Als Katalysatoren können auch Zinn(II)-Salze von Carbonsäuren eingesetzt werden, wobei vorzugsweise die jeweils zugrundeliegende Carbonsäure von 2 bis 20 Kohlenstoffatome aufweist. Besonders bevorzugt sind das Zinn(II)-Salz der 2-Ethylhexansäure (d.h. Zinn(II)-(2-ethylhexanoat)), das Zinn(II)-Salz der 2-Butyloctansäure, das Zinn(II)-Salz der 2-Hexyldecansäure, das Zinn(II)-Salz der Neodecansäure, das Zinn(II)-Salz der Ölsäure, das Zinn(II)-Salz der Ricinolsäure und Zinn(II)laurat. Es können auuch Zinn(IV)-Verbindungen, wie z.B. Dibutylzinnoxid, Dibutylzinndichlorid, Dibutylzinndiacetat, Dibutylzinndilaurat, Dibutylzinnmaleat oder Dioctylzinndiacetat als Katalysatoren eingesetzt werden. Selbstverständlich können alle genannten Katalysatoren auch als Gemische eingesetzt werden.

Als Hilfs- und Zusatzstoffe F2 werden bevorzugt eingesetzt
a) oberflächenaktive Zusatzstoffe (Tenside), wie Emulgatoren und Schaumstabilisatoren,
b) ein oder mehrere Additive ausgewählt aus der Gruppe bestehend aus wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

### Komponente G

Als Komponente G werden Wasser und/oder physikalische Treibmittel eingesetzt. Als physikalische Treibmittel werden beispielsweise Kohlendioxid und/oder leicht flüchtige organische Substanzen als Treibmittel eingesetzt. Vorzugsweise wird Wasser als Komponente G eingesetzt.

### Komponente H

Geeignete Di- und/oder Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel (III)

Q(NCO)ₙ, (III)

in der
n = 2 - 4, vorzugsweise 2 -3,
   und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Bevorzugt werden in der Regel die technisch leicht zugänglichen Polyisocyanate, zum Beispiel das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat eine oder mehrere Verbindungen ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt. Besonders bevorzugt wird 2,4- und/oder 2,6-Toluylendiisocyanat eingesetzt.

In einer weiteren Ausführungsform des erfindungsgemäßen Verfahrens umfasst die Isocyanat-Komponente B ein Toluylendiisocyanat-Isomerengemisch aus 55 bis 90 Gew.-% 2,4- und 10 bis 45Gew.% 2,6-TDI.

In einer weiteren Ausführungsform des erfindungsgemäßen Verfahrens umfasst die Isocyanat-Komponente D 100% 2,4- Toluylendiisocyanat.

In einer Ausführungsform des erfindungsgemäßen Verfahrens beträgt die Kennzahl ≥ 90 bis ≤ 120. Vorzugsweise liegt die Kennzahl in einem Bereich von ≥ 100 bis ≤ 115, besonders bevorzugt ≥ 102 bis ≤ 110. Die Kennzahl (Index) gibt das prozentuale Verhältnis der tatsächlich eingesetzten Isocyanat-Menge zur stöchiometrischen, d.h. für die Umsetzung der OH-Äquivalente berechneten Menge an Isocyanat-Gruppen (NCO)-Menge an.

Kennzahl = [Isocyanat-Menge eingesetzt) : (Isocyanat-Menge berechnet) • 100 (IV)

Zur Herstellung der Polyurethanschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Polyurethanschaumstoffe liegen vorzugsweise als Polyurethanweichschaumstoffe vor und können als Form- oder auch als Blockschaumstoffe, vorzugsweise als Blockschaumstoffe hergestellt werden. Gegenstand der Erfindung sind daher ein Verfahren zur Herstellung der Polyurethanschaumstoffe, die nach diesen Verfahren hergestellten Polyurethanschaumstoffe, die nach diesen Verfahren hergestellten Polyurethanweichblockschaumstoffe bzw. Polyurethanweichformschaumstoffe, die Verwendung der Polyurethanweichschaumstoffe zur Herstellung von Formteilen sowie die Formteile selbst.

Die nach der Erfindung erhältlichen Polyurethanschaumstoffe vorzugsweise Polyurethanweichschaumstoffe, finden beispielsweise folgende Anwendung: Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

Die erfindungsgemäßen Weichschäume weisen eine Rohdichte gemäß DIN EN ISO 3386-1-98 im Bereich von ≥ 16 bis ≤ 60 kg/m³, bevorzugt ≥ 20 bis ≤ 50 kg/m³ auf, wobei die niedrigen Rohdichten unter Verwendung von flüssigem CO₂ erhalten werden.

### Beispiele

Die vorliegende Erfindung wird anhand der nachfolgenden Beispiele erläutert, ohne jedoch darauf beschränkt zu sein. Es bedeuten:

### Eingesetzte Rohstoffe:

DMC-Katalysator: Doppelmetallcyanid-Katalysator, hergestellt gemäß Beispiel 6 in WO-A 01/80994.
Phosphorsäure (100%), Fa. Sigma-Aldrich
Arcol® 1108: trifunktionelles Polyetherpolyol, OH-Zahl 48, Covestro AG, Leverkusen
Niax® Catalyst A-1: Handelsprodukt der Firma Momentive Performance Materials GmbH, Leverkusen, Bis[2- (N,N'-dimethylamino)ethyl] -basiert
Tegostab® B 8239, Handelsprodukt,Fa. Evonik Nutrition & Care GmbH, Essen
DABCO® T-9, Handelsprodukt der Firma Air Products GmbH, Hamburg, Zinn-(2-ethylhexanoat) Desmodur® T 80, Mischung von 2,4'-Toluylendiisocyanat und 2,6'-Toluylendiisocyanat im Verhältnis 80/20, Covestro AG, Leverkusen

### Messmethoden:

Experimentell bestimmte OH-Zahlen wurden gemäß der Vorschrift der DIN 53240 ermittelt.
Experimentell bestimmte Säurezahlen wurden gemäß der Vorschrift der DIN 53402 ermittelt.
Die Viskositäten wurden mittels Rotationsviskosimeter (Physica MCR 51, Hersteller: Anton Paar) nach der Vorschrift der DIN 53018 ermittelt.
Die Stauchhärte und die Rohdichte der Schaumstoffe wurden gemäß DIN EN ISO 3386-1 bestimmt.
Das Brandverhalten wurde an 13 mm dicken Schaumprüfkörpern gemäß Federal Motor Vehicle Safety Standard 302 ermittelt.

### Beispiel 1:

### Verfahrensschritt 1: Ethoxylierung von Phosphorsäure:

300,1 g (3,06 mol) Phosphorsäure (100%) wurden in einem 21 Edelstahlreaktor vorgelegt und unter Rühren auf 55 °C aufgeheizt. Nach mehrmaligem Stickstoff/Vakuum-Austausch zwischen 0,1 und 3,0 bar (absolut), wurde der Druck im Reaktor mittels Stickstoff auf 2,1 bar (absolut) eingestellt. 1450 g (32,9 mol) Ethylenoxid wurden bei einer Temperatur von 55 °C mit einer Rate von 200 g/h zudosiert. Nach einer Nachreaktionszeit von 3 Stunden wurde die Reaktionsmischung auf Raumtemperatur abgekühlt und dem Reaktor entnommen. Flüchtige Komponenten wurden bei 90 °C unter reduziertem Druck (ungefähr 10 mbar) innerhalb von 30 Minuten abdestilliert.
Das Produkt hatte eine OH-Zahl von 308 mg KOH/g und eine Säurezahl von 0,08 mg KOH/g.

### Verfahrensschritt 2: DMC-katalysierte Alkoxylierung des Produkts aus Verfahrensschritt 1:

268 g des Zwischenprodukts aus Verfahrensschritt 1 und 0,15 g DMC-Katalysator wurden in einem 21 Edelstahlreaktor vorgelegt und unter Rühren (800 U/min) auf 130 °C aufgeheizt. Nach 45 minütigem Stickstoff-Strippen unter reduziertem Druck (0,1 bar absolut), wurden 25 g Propylenoxid zur Katalysatoraktivierung hinzugefügt. Nach einer Induktionsphase von etwa 15 min, wurde das restliche Propylenoxid (1207 g) unter Rühren (800 U/min) kontinuierlich dem Reaktor bei einer Temperatur von 130°C innerhalb von 190 min zugeführt, wobei bis zum Ende der Zugabe der Druck auf 4,45 bar (absolut) anstieg. Nach einer Nachreaktionszeit von 60 min bei 130 °C wurden flüchtige Verbindungen bei 90 °C unter reduziertem Druck (ungefähr 10 mbar) innerhalb von 30 Minuten abdestilliert. Das Endprodukt wurde mit 500 ppm des Antioxidans Irganox 1076 stabilisiert.
Produkteigenschaften:
OH-Zahl = 47,3 mg KOH/g
Säurezahl = 0,09 mg KOH/g
Viskosität (25 °C) = 1825 mPas

### Beispiel 2:

### Verfahrensschritt 1: Ethoxylierung von Phosphorsäure:

Verfahrensschritt 1 wurde analog zum Verfahrensschritt 1 in Beispiel 1 durchgeführt.

### Verfahrensschritt 2: DMC-katalysierte Alkoxylierung des Produkts aus Verfahrensschritt 1:

265 g des Zwischenprodukts aus Verfahrensschritt 1 und 0,15 g DMC-Katalysator wurden in einem 21 Edelstahlreaktor vorgelegt und unter Rühren (800 U/min) auf 130 °C aufgeheizt. Nach 45 minütigem Stickstoff-Strippen unter reduziertem Druck (0,1 bar absolut), wurden 25 g Propylenoxid zur Katalysatoraktivierung hinzugefügt. Nach einer Induktionsphase von etwa 15 min, wurde ein Gemisch aus 1075 g Propylenoxid und 123 g Ethylenoxid unter Rühren (800 U/min) kontinuierlich dem Reaktor bei einer Temperatur von 130°C innerhalb von 155 min zugeführt, wobei bis zum Ende der Zugabe der Druck auf 4,70 bar (absolut) anstieg. Nach einer Nachreaktionszeit von 90 min bei 130 °C wurden flüchtige Verbindungen bei 90 °C unter reduziertem Druck (ungefähr 10 mbar) innerhalb von 30 Minuten abdestilliert. Das Endprodukt wurde mit 500 ppm des Antioxidans Irganox 1076 stabilisiert.
Produkteigenschaften:
OH-Zahl = 47,0 mg KOH/g
Säurezahl = 0,05 mg KOH/g
Viskosität (25 °C) = 2070 mPas

### Beispiel 3 (Vergleich):

### Verfahrensschritt 1: Propoxylierung von Phosphorsäure:

300,0 g (3,06 mol) Phosphorsäure (100%) wurden in einem 21 Edelstahlreaktor vorgelegt und unter Rühren auf 55 °C aufgeheizt. Nach mehrmaligem Stickstoff/Vakuum-Austausch zwischen 0,1 und 3,0 bar (absolut), wurde der Druck im Reaktor mittels Stickstoff auf 1,2 bar (absolut) eingestellt. 1332 g (22,9 mol) Propylenoxid wurden bei einer Temperatur von 55 °C innerhalb von 6 Stunden zudosiert. Nach einer Nachreaktionszeit von 5 Stunden wurde die Reaktionsmischung auf Raumtemperatur abgekühlt und dem Reaktor entnommen. Flüchtige Komponenten wurden bei 90 °C unter reduziertem Druck (ungefähr 10 mbar) innerhalb von 30 Minuten abdestilliert.
Das Produkt hatte eine OH-Zahl von 355 mg KOH/g und eine Säurezahl von 0,0 mg KOH/g.

### Verfahrensschritt 2: DMC-katalysierte Alkoxylierung des Produkts aus Verfahrensschritt 1:

203 g des Zwischenprodukts aus Verfahrensschritt 1 und 0,15 g DMC-Katalysator wurden in einem 21 Edelstahlreaktor vorgelegt und unter Rühren (800 U/min) auf 130 °C aufgeheizt. Nach 45 minütigem Stickstoff-Strippen unter reduziertem Druck (0,1 bar absolut), wurden 25 g Propylenoxid zur Katalysatoraktivierung hinzugefügt. Nach einer Induktionsphase von etwa 60 min, wurde das restliche Propylenoxid (1272 g) unter Rühren (800 U/min) kontinuierlich dem Reaktor bei einer Temperatur von 130°C innerhalb von 125 min zugeführt, wobei bis zum Ende der Zugabe der Druck auf 4,38 bar (absolut) anstieg. Nach einer Nachreaktionszeit von 60 min bei 130 °C wurden flüchtige Verbindungen bei 90 °C unter reduziertem Druck (ungefähr 10 mbar) innerhalb von 30 Minuten abdestilliert. Das Endprodukt wurde mit 500 ppm des Antioxidans Irganox 1076 stabilisiert.
Produkteigenschaften:
OH-Zahl = 46,9 mg KOH/g
Viskosität (25 °C) = 1155 mPas

### Beispiel 4 (Vergleich):

In einem 11 Edelstahlreaktor wurden 110 g eines durch KOH-Katalyse mit Glycerin als trifunktionellem Starter hergestellten Ethoxylats (OH-Zahl = 307 mg KOH/g) und 0,07 g DMC-Katalysator vorgelegt und unter Rühren (800 U/min) auf 130°C aufgeheizt. Nach 45 minütigem Stickstoff-Strippen unter reduziertem Druck (0,1 bar absolut), wurden 594 g Propylenoxid unter Rühren (800 U/min) kontinuierlich dem Reaktor bei einer Temperatur von 130°C innerhalb von 180 min zugeführt. Nach einer Nachreaktionszeit von 60 min bei 130 °C wurden flüchtige Verbindungen bei 90 °C unter reduziertem Druck (ungefähr 10 mbar) innerhalb von 30 Minuten abdestilliert. Das Endprodukt wurde mit 500 ppm des Antioxidans Irganox 1076 stabilisiert.
Produkteigenschaften:
OH-Zahl = 48,7 mg KOH/g
Viskosität (25 °C) = 649 mPas

### Beispiel 5 (Vergleich):

In einem 11 Edelstahlreaktor wurden 110 g eines durch KOH-Katalyse mit Glycerin als trifunktionellem Starter hergestellten Ethoxylats (OH-Zahl = 307 mg KOH/g) und 0,07 g DMC-Katalysator vorgelegt und unter Rühren (800 U/min) auf 130°C aufgeheizt. Nach 45 minütigem Stickstoff-Strippen unter reduziertem Druck (0,1 bar absolut), wurde ein Gemisch aus 534 g Propylenoxid und 59 g Ethylenoxid unter Rühren (800 U/min) kontinuierlich dem Reaktor bei einer Temperatur von 130°C innerhalb von 180 min zugeführt. Nach einer Nachreaktionszeit von 60 min bei 130 °C wurden flüchtige Verbindungen bei 90 °C unter reduziertem Druck (ungefähr 10 mbar) innerhalb von 30 Minuten abdestilliert. Das Endprodukt wurde mit 500 ppm des Antioxidans Irganox® 1076 stabilisiert.
Produkteigenschaften:
OH-Zahl = 48,0 mg KOH/g
Viskosität (25 °C) = 657 mPas

**Tabelle 1: Strukturen und Eigenschaften der hergestellten Polyetherpolyole (erfindungsgemäß und**

| **Polyol Beispiel** | **Zwischenprodukt aus Verfahrensschritt 1** | **Epoxid in DMC Stufe (Verfahrens schritt 2)** | **OH-Zahl [mg KOH/g]** | **Säurezahl [mg KOH/g]** | **Visk. 25°C [mPas]** |
|---|---|---|---|---|---|
| 1 | H₃PO₄ ← EO, OH-Zahl 308 | PO | 47,3 | 0,09 | 1825 |
| 2 | H₃PO₄ ← EO, OH-Zahl 308 | PO/EO (90/10) | 47,0 | 0,05 | 2070 |

| Vergleichsbeispiele | | | | | |
|---|---|---|---|---|---|
| 3 | H₃PO₄ ← PO, OH-Zahl 355 | PO | 46,9 | n.b. * | 1155 |
| 4 | GLY ← EO, OH-Zahl 307 | PO | 48,7 | n.b. * | 649 |
| 5 | GLY ← EO, OH-Zahl 307 | PO/EO (90/10) | 48,0 | n.b. * | 657 |

| | | | | | |
|---|---|---|---|---|---|
| Vergleich) * n.b.: nicht bestimmt | | | | | |

### Formulierungen für Polyurethanweichschaum (Blockschaum)

Es wurden Polyurethanschäume gemäß den in den nachfolgenden Tabellen 2 und 3 angegebenen Rezepturen hergestellt.

Das Entflammbarkeitsverhalten wurde gemäß dem Standard FMVSS 302 gemessen, wobei die gemessene Abbrandgeschwindigkeit (mm·s⁻¹) der entscheidende Parameter ist.
Die erfindungsgemäßen Phosphorsäure-gestarteten Polyetherpolyole der Beipiele 1 und 2 fuhren zu Mischungen, die eine identische Verschäumbarkeit wie eine rein auf Arcol® 1108 basierte Mischung zeigen, bedingen jedoch bezüglich des Schaums ein deutlich verbessertes Entflammbarkeitsverhalten gemäß dem Standard FMVSS 302 als Schäume die auf dem Standardpolyol basieren. Dies wird durch die deutlich reduzierte Abbrandgeschwindigkeit der erfindungsgemäßen Schäume belegt (Tabelle 2, letzte Zeile, jeweils Durchschnitt aus 5 Messungen).

**Tabelle 2: Schaumformulierungen und Testergebnisse**

| Beispiel | | 7 Standard | 8 | 9 | 11 | 13 |
|---|---|---|---|---|---|---|
| Polyol | | | | | | |
| Arcol® 1108 | [p.b.w.] | 100 | 50 | | 50 | |
| aus Bsp. 1 | [p.b.w.] | | 50 | 100 | | |
| aus Bsp. 2 | [p.b.w.] | | | | 50 | 100 |
| Wasser | [p.b.w.] | 3.0 | 3.0 | 3.0 | 3.0 | 3.0 |
| Niax® Catalyst A-1 | [p.b.w.] | 0.15 | 0.15 | 0.15 | 0.15 | 0.15 |
| Tegostab® B 8239 | [p.b.w.] | 1.0 | 1.0 | 1.0 | 1.0 | 1.0 |
| Dabco® T-9 | [p.b.w.] | 0.18 | 0.18 | 0.18 | 0.18 | 0.18 |
| | | | | | | |
| Desmodur® T 80 | [p.b.w.] | 39.4 | 39.3 | 39.3 | 39.3 | 39.2 |
| Isocyanat-Index | | 108 | 108 | 108 | 108 | 108 |
| Rohdichte | [kg m⁻³] | 31.4 | 32.6 | 30.6 | 32.9 | 33.2 |
| Stauchärte 40 % | [kPa] | 4.2 | 4.2 | 3.6 | 4.0 | 3.6 |
| | | | | | | |

| **FMVSS 302** | | | | | | |
|---|---|---|---|---|---|---|
| Abbrandgeschwindigkeit | **[mm s⁻¹]** | **94** | **27** | **9** | **0** | **0** |

**Tabelle 3: Schaumformulierungen und Testergebnisse**

| Beispiel | | 14 Standard | 15 | 16 | 17 | 18 | 19 |
|---|---|---|---|---|---|---|---|
| Polyol | | | | | | | |
| Arcol® 1108 | [p.b.w.] | 100 | 50 | | 50 | | |
| aus Bsp. 4 (Vgl.) | [p.b.w.] | | 50 | 100 | | | |
| aus Bsp. 5 (Vgl.) | [p.b.w.] | | | | 50 | 100 | |
| aus Bsp. 3 (Vgl.) | [p.b.w.] | | | | | | 100 |
| Wasser | [p.b.w.] | 3.0 | 3.0 | 3.0 | 3.0 | 3.0 | 3.0 |
| Niax® Catalyst A-1 | [p.b.w.] | 0.15 | 0.15 | 0.15 | 0.15 | 0.15 | 0.15 |
| Tegostab® B 8239 | [p.b.w.] | 1.0 | 1.0 | 1.0 | 1.0 | 1.0 | 1.0 |
| Dabco® T-9 | [p.b.w.] | 0.18 | 0.18 | 0.18 | 0.18 | 0.18 | 0.18 |
| Desmodur® T 80 | [p.b.w.] | 39.4 | 39.4 | 39.4 | 39.4 | 39.4 | 39.4 |
| Isocyanat-Index | | 108 | 108 | 108 | 108 | 108 | 108 |
| Rohdichte | [kg m⁻³] | 31.4 | 31.4 | 30.7 | 29.3 | 34.6 | 46.2 |
| Stauchhärte 40 % | [kPa] | 4.2 | 4.6 | 4.2 | 4.8 | 4.9 | 4.2 |
| | | | | | | | |

| **FMVSS 302** | | | | | | | |
|---|---|---|---|---|---|---|---|
| Abbrandgeschwindigkeit | **[mm s⁻¹]** | **94** | **91** | **84** | **90** | **84** | **29** |

Schäume auf Basis der Vergleichspolyole aus Beispiel 4 und 5, die auf Glycerin gestartet wurden, zeigen kein verbessertes Entflammbarkeitsverhalten gegenüber Schäumen die auf dem Standardpolyol Arcol 1108 basieren (vgl. Tabelle 3).

Das rein Propylenoxid-basierte Polyol aus dem Vergleichsbeispiel 3 lässt keinen stabilen Schäumungsprozess zu, wie anhand der deutlich höheren Schaumdichte (46 kg/m³) zu erkennen ist. Ein Vergleich des Entflammbarkeitsverhaltens ist daher nicht möglich.

## Patentansprüche

1. Verfahren zur Herstellung von Poly(oxyalkylen)polyolen, wobei zunächst in einem ersten Schritt
A)
i) wenigstens eine Phosphor-haltige Verbindung mit wenigstens einer Hydroxylgruppe, oder
ii) eine Mischung aus wenigstens einer Phosphor-haltigen, wenigstens eine Hydroxylgruppe-aufweisenden Verbindung mit wenigstens einer H-funktionellen Starterverbindung, wobei der Anteil der H-funktionellen Starterverbindungen in der Mischung max. 50 Gew.-% beträgt,
mit
B) einer Alkylenoxidkomponente, umfassend:
i) ≥ 50 bis ≤ 100 Gewichts-% Ethylenoxid und
ii) ≥ 0 bis ≤ 50 Gewichts-% anderer Alkylenoxide als Ethylenoxid
umgesetzt werden, und das aus dem ersten Schritt erhaltene Produkt dann unter DMC-Katalyse mit
C) einer Alkylenoxidkomponente, umfassend:
i) ≥ 0 bis ≤ 25 Gewichts-% Ethylenoxid und
ii) ≥ 75 bis ≤ 100 Gewichts-% anderer Alkylenoxide als Ethylenoxid und
D) gegebenenfalls Kohlendioxid
umgesetzt wird,
wobei im ersten Verfahrensschritt das Molverhältnis der Komponente (B) zu Hydroxylgruppen der Komponente (A) 1 : 1 bis 8 : 1 beträgt.

2. Verfahren gemäß Anspruch 1, wobei als Phosphor-haltige Verbindungen mit wenigstens einer Hydroxylgruppe (Komponente A) i))
a) Verbindungen zum Einsatz kommen, die durch folgende Formel dargestellt werden können: 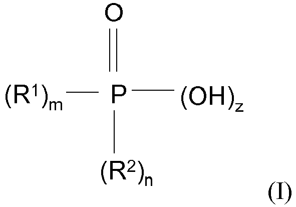 wobei gilt:
z = eine ganze Zahl von 1 bis 3,
n = 0 oder 1,
m = 0 oder 1 und
z + m + n = 3,
und wobei R¹ und R² gleich oder verschieden voneinander sind und stehen für
i) -H
ii) -P(O)(OH)₂
iii) über ein C-Atom an den Phosphor gebundene, gesättigte oder ungesättigte, lineare oder verzweigte, aliphatische oder cycloaliphatische oder gegebenenfalls substituierte aromatische oder araliphatische Reste mit bis zu 10 Kohlenstoffatomen, die gegebenenfalls Heteroatome aus der Reihe Sauerstoff, Schwefel und Stickstoff enthalten,
iv) -OR³ oder -OC(O)R⁴, wobei R³ bzw. R⁴ für gesättigte oder ungesättigte, lineare oder verzweigte, aliphatische oder cycloaliphatische oder gegebenenfalls substituierte aromatische oder araliphatische Reste mit bis zu 10 Kohlenstoffatomen stehen, die gegebenenfalls Heteroatome aus der Reihe Sauerstoff, Schwefel und Stickstoff enthalten,
und/oder
b) durch Kondensation erhältliche, wenigstens eine Hydroxylgruppe aufweisende Oligomere und/oder Polymere jedweder der in a) genannten Verbindungen zum Einsatz kommen, wobei es sich um Kondensate nur einer Verbindung, als auch um Mischkondensate handeln kann und die Oligomere bzw. Polymere lineare, verzweigte oder Ring-förmige Strukturen aufweisen können.

3. Verfahren gemäß Anspruch 2, wobei es sich bei den unter a) genannten Verbindungen um Phosphorsäure, Phosphonsäure (phosphorige Säure), Phosphinsäure, Pyrophosphorsäure (Diphosphorsäure), Diphosphonsäure, Polyphosphor- und Polyphosphonsäuren, wie z.B. Tripolyphosphorsäure bzw. -phosphonsäure, Tetrapolyphosphorsäure bzw. -phosphonsäure, Tri- oder Tetrametaphosphorsäure, Hypodiphosphorsäure oder Ester von jedweden dieser Verbindungen handelt.

4. Verfahren gemäß einem der Ansprüche 1 bis 3, wobei Komponente A 100-prozentige Phosphorsäure (Komponente A) i)), 85-prozentiger Phosphorsäure (Komponente A) ii)) oder eine Mischung aus 85-prozentiger Phosphorsäure und wenigstens einer weiteren H-funktionellen Starterverbindung (Komponente A) ii)) umfasst.

5. Verfahren gemäß einem der Ansprüche 1 bis 4, wobei Komponente B ≥ 80 Gewichts-%, bevorzugt ≥ 90 Gewichts-%, besonders bevorzugt 100 Gew.-% Ethylenoxid enthält.

6. Verfahren gemäß einem der Ansprüche 1 bis 5, wobei im ersten Verfahrensschritt das Molverhältnis der Komponente (B) zu Hydroxylgruppen der Komponente (A) 2 : 1 bis 5 : 1 beträgt.

7. Verfahren gemäß einem der Ansprüche 1 bis 6, wobei der erste Verfahrensschritt
i) ohne einen die Alkoxylierungsreaktion katalysierenden Katalysator oder
ii) unter Verwendung eines die Alkoxylierungsreaktion katalysierenden Katalysators, ausgenommen einem DMC-Katalysator,
durchgeführt wird.

8. Verfahren gemäß einem der Ansprüche 1 bis 7, wobei ≥ 85 Gewichts-%, besonders bevorzugt ≥ 90 Gewichts-% anderer Alkylenoxide als Ethylenoxid in Komponente C) ii) im zweiten Verfahrensschritt eingesetzt werden.

9. Verfahren gemäß einem der Ansprüche 1 bis 8, wobei Komponente B) ii) und/oder Komponente C) ii) unabhängig voneinander eine oder mehrere Verbindungen umfasst/umfassen, ausgewählt aus der Gruppe bestehend aus Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan.

10. Verfahren gemäß einem der Ansprüche 1 bis 9, wobei im zweiten Verfahrensschritt das Molverhältnis der Komponente (C) zu Hydroxylgruppen des Produkts aus Schritt 1 5 bis 30 : 1, bevorzugt 10 bis 20 : 1 beträgt.

11. Poly(oxyalkylen)polyole erhältlich nach einem Verfahren gemäß einem der Ansprüche 1 bis 10.

12. Verwendung der aus dem erfindungsgemäßen Verfahren erhältlichen Poly(oxyalkylen)polyole zur Herstellung von Polyurethanschaumstoffen, bevorzugt Polyurethanweichschaumstoffen.

13. Verfahren zur Herstellung von Polyurethanschaumstoffen, vorzugsweise Polyurethanweichschaumstoffen, durch Umsetzung von
Komponente E enthaltend mindestens ein Poly(oxyalkylen)polyol, erhältlich nach einem Verfahren gemäß einem der Ansprüche 1 bis 10 (Komponente E1),
F gegebenenfalls
F1) Katalysatoren und/oder
F2) Hilfs- und Zusatzstoffen,
G Wasser und/oder physikalischen Treibmitteln,
mit
H Di und/oder Polyisocyanaten,
wobei die Herstellung bei einer Kennzahl von ≥ 90 bis ≤ 120 erfolgt.

14. Verfahren zur Herstellung von Polyurethanschaumstoffen, vorzugsweise Polyurethanweichschaumstoffen, gemäß Anspruch 13, durch Umsetzung von
E1 ≥ 20 bis ≤ 100 Gew.-Teilen, vorzugsweise ≥ 40 bis ≤ 100 Gew.-Teilen mindestens eines Poly(oxyalkylen)polyols, erhältlich nach einem Verfahren gemäß einem der Ansprüche 1 bis 10 (Komponente E1), und Hydroxylzahlen gemäß DIN 53240 von ≥ 20 mg KOH/g bis ≤ 130 mg KOH/g aufweist,
E2 ≤ 80 bis ≥ 0 Gew.-Teilen, bevorzugt von ≤ 60 bis ≥ 0 Gew.-Teilen mindestens eines Poly(oxyalkylen)polyols, welches Hydroxylzahlen gemäß DIN 53240 von ≥ 20 mg KOH/g bis ≤ 130 mg KOH/g aufweist und nicht unter die Definition der Komponente E1 fällt,
E3 ≤ 50 bis ≥ 0 Gew.-Teilen, bezogen auf die Summe der Gewichtsteile der Komponente E1 und E2, mindestens einer gegenüber Isocyanaten reaktionsfähige Gruppen aufweisende Verbindung, die nicht unter die Definition der Komponenten E1 oder E2 fällt,
F gegebenenfalls
F1) Katalysatoren und/oder
F2) Hilfs- und Zusatzstoffen,
G Wasser und/oder physikalischen Treibmitteln,
mit
H Di und/oder Polyisocyanaten,
wobei die Herstellung bei einer Kennzahl von ≥ 90 bis ≤ 120 erfolgt und wobei die Summe der Gewichtsteile E1 + E2 in der Zusammensetzung 100 Gewichtsteile ergibt.

15. Verfahren zur Herstellung von Polyurethanschaumstoffen, vorzugsweise Polyurethanweichschaumstoffen, durch Umsetzung von
Komponente E enthaltend mindestens ein Poly(oxyalkylen)polyol, welches erhältlich ist nach einem Verfahren gemäß einem der Ansprüche 1 bis 10 (Komponente E1), sowie mindestens ein Poly(oxyalkylen)polyol, das nicht unter Verwendung von Phosphor-haltigen Verbindungen hergestellt wurde (Komponente E2),
F gegebenenfalls
F1) Katalysatoren und/oder,
F2) Hilfs- und Zusatzstoffen
G Wasser und/oder physikalischen Treibmitteln,
mit
H Di und/oder Polyisocyanaten,
wobei die Herstellung bei einer Kennzahl von ≥ 90 bis ≤ 120 erfolgt.

16. Verfahren zur Herstellung von Polyurethanschaumstoffen, vorzugsweise Polyurethanweichschaumstoffen, gemäß Anspruch 15, durch Umsetzung von
E1 ≥ 20 bis < 100 Gew.-Teilen, vorzugsweise ≥ 40 bis < 100 Gew.-Teilen mindestens eines Poly(oxyalkylen)polyols, welches erhältlich ist nach einem Verfahren gemäß einem der Ansprüche 1 bis 10 (Komponente E1) und Hydroxylzahlen gemäß DIN 53240 von ≥ 20 mg KOH/g bis ≤ 130 mg KOH/g aufweist,
E2 ≤ 80 bis > 0 Gew.-Teilen, bevorzugt von ≤ 60 bis > 0 Gew.-Teilen mindestens eines Poly(oxyalkylen)polyols, welches Hydroxylzahlen gemäß DIN 53240 von ≥ 20 mg KOH/g bis ≤ 130 mg KOH/g aufweist und **nicht unter Verwendung von Phosphor-haltigen Verbindungen** hergestellt wurde,
E3 ≤ 50 bis ≥ 0 Gew.-Teilen, bezogen auf die Summe der Gewichtsteile der Komponente E1 und E2, mindestens einer gegenüber Isocyanaten reaktionsfähige Gruppen aufweisende Verbindung, die nicht unter die Definition der Komponenten E1 oder E2 fällt,
F gegebenenfalls
F1) Katalysatoren und/oder,
F2) Hilfs- und Zusatzstoffen
G Wasser und/oder physikalischen Treibmitteln,
mit
H Di und/oder Polyisocyanaten,
wobei die Herstellung bei einer Kennzahl von ≥ 90 bis ≤ 120 erfolgt und wobei die Summe der Gewichtsteile E1 + E2 in der Zusammensetzung 100 Gewichtsteile ergibt.

17. Polyurethanschaumstoffen, vorzugsweise Polyurethanweichschaumstoffen, erhältlich nach einem Verfahren gemäß einem der Ansprüche 13 bis 16.

18. Verwendung der Polyurethanschaumstoffen gemäß Anspruch 17 zur Herstellung von Möbelpolsterungen, Textileinlagen, Matratzen, Automobilsitzen, Kopfstützen, Armlehnen, Schwämme, Schaumstofffolien zur Verwendung in Automobilteilen wie Dachhimmeln, Türseitenverkleidungen, Sitzauflagen und Bauelementen.

## Claims

1. Process for the production of poly(oxyalkylene) polyols, wherein initially in a first step
A)
i) at least one phosphorus-containing compound having at least one hydroxyl group
or
ii) a mixture of at least one phosphorus-containing compound comprising at least one hydroxyl group and with at least one H-functional starter compound, wherein the proportion of the H-functional starter compounds in the mixture is not more than 50% by weight, are reacted with
B) an alkylene oxide component, comprising:
i) ≥ 50% to ≤ 100% by weight of ethylene oxide and
ii) ≥ 0% to ≤ 50% by weight of alkylene oxides other than ethylene oxide
and the product obtained from the first step is then reacted under DMC catalysis with
C) an alkylene oxide component, comprising:
i) ≥ 0% to ≤ 25% by weight of ethylene oxide and
ii) ≥ 75% to ≤ 100% by weight of alkylene oxides other than ethylene oxide and
D) optionally carbon dioxide,
wherein in the first process step the molar ratio of the component (B) to the hydroxyl groups of the component (A) is 1:1 to 8:1.

2. Process according to Claim 1, wherein as the phosphorus-containing compounds having at least one hydroxyl group (component A)i))
a) compounds which may be represented by the following formula are employed: 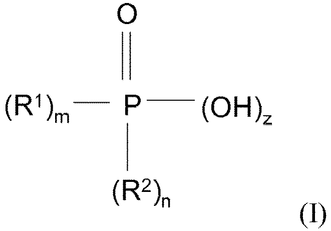 wherein:
z = an integer from 1 to 3,
n = 0 or 1,
m = 0 or 1 and
z + m + n = 3,
and wherein R¹ and R² are identical or different to one another and represent
i) -H
ii) -P(O) (OH)₂
iii) saturated or unsaturated, linear or branched, aliphatic or cycloaliphatic or optionally substituted aromatic or araliphatic radicals having up to 10 carbon atoms which are bonded to the phosphorus via a C atom and optionally contain heteroatoms from the group of oxygen, sulphur and nitrogen,
iv) -OR³ or -OC(O)R⁴, wherein R³ and R⁴ represent saturated or unsaturated, linear or branched, aliphatic or cycloaliphatic or optionally substituted aromatic or araliphatic radicals having up to 10 carbon atoms which optionally contain heteroatoms from the group of oxygen, sulphur and nitrogen,
and/or
b) oligomers and/or polymers of any of the compounds recited in a) which are obtainable by condensation and comprise at least one hydroxyl group are employed, wherein these may be condensates of only one compound or mixed condensates and the oligomers/polymers may have linear, branched or ring-shaped structures.

3. Process according to Claim 2, wherein the compounds recited under a) are phosphoric acid, phosphonic acid (phosphorous acid), phosphinic acid, pyrophosphoric acid (diphosphoric acid), diphosphonic acid, polyphosphoric or polyphosphonic acids, for example tripolyphosphoric acid or tripolyphosphonic acid, tetrapolyphosphoric acid or tetrapolyphosphonic acid, tri- or tetrametaphosphoric acid, hypodiphosphoric acid or esters of any of these compounds.

4. Process according to any of Claims 1 to 3, wherein component A comprises 100 percent strength phosphoric acid (component A)i)), 85 percent strength phosphoric acid (component A)ii)) or a mixture of 85 percent strength phosphoric acid and at least one further H-functional starter compound (component A)ii)).

5. Process according to any of Claims 1 to 4, wherein component B contains ≥ 80% by weight, preferably ≥ 90% by weight, particularly preferably 100% by weight, of ethylene oxide.

6. Process according to any of Claims 1 to 5, wherein in the first process step the molar ratio of the component (B) to hydroxyl groups of the component (A) is 2:1 to 5:1.

7. Process according to any of Claims 1 to 6, wherein the first process step is performed
i) without a catalyst that catalyzes the alkoxylation reaction or
ii) using a catalyst that catalyzes the alkoxylation reaction, with the exception of a DMC catalyst.

8. Process according to any of Claims 1 to 7, wherein ≥ 85% by weight, particularly preferably ≥ 90% by weight, of alkylene oxides other than ethylene oxide are employed in component C) ii) in the second process step.

9. Process according to any of Claims 1 to 8, wherein component B ii) and/or component C) ii) independently of one another comprise one or more compounds selected from the group consisting of propylene oxide, 1-butene oxide, 2,3-butene oxide, 2-methyl-1,2-propene oxide (isobutene oxide), 1-pentene oxide, 2,3-pentene oxide, 2-mèthyl-1,2-butene oxide, 3-methyl-1,2-butene oxide, 1-hexene oxide, 2,3-hexene oxide, 3,4-hexene oxide, 2-methyl-1,2-pentene oxide, 4-methyl-1,2-pentene oxide, 2-ethyl-1,2-butene oxide, 1-heptene oxide, 1-octene oxide, 1-nonene oxide, 1-decene oxide, 1-undecene oxide, 1-dodecene oxide, 4-methyl-1,2-pentene oxide, butadiene monoxide, isoprene monoxide, cyclopentene oxide, cyclohexene oxide, cycloheptene oxide, cyclooctene oxide, styrene oxide, methylstyrene oxide, pinene oxide, mono- or polyepoxidized fats as mono-, di- and triglycerides, epoxidized fatty acids, C₁-C₂₄ esters of epoxidized fatty acids, epichlorohydrin, glycidol, and derivatives of glycidol, for example methyl glycidyl ether, ethyl glycidyl ether, 2-ethylhexyl glycidyl ether, allyl glycidyl ether, glycidyl methacrylate and epoxy-functional alkoxysilanes, for example 3-glycidyloxypropyltrimethoxysilane, 3-glycidyloxypropyltriethoxysilane, 3-glycidyloxypropyltripropoxysilan, 3-glycidyloxypropylmethyldimethoxysilane, 3-glycidyloxypropylethyldiethoxysilane, 3-glycidyloxypropyltriisopropoxysilane.

10. Process according to any of claims 1 to 9, wherein in the second process step the molar ratio of the component (C) to hydroxyl groups of the product from step 1 is 5 to 30:1, preferably 10 to 20:1.

11. Poly(oxyalkylene) polyols obtainable by a process according to any of Claims 1 to 10.

12. Use of the poly(oxyalkylene) polyols obtainable from the process according to the invention for production of polyurethane foams, preferably flexible polyurethane foams.

13. Process for the production of polyurethane foams, preferably flexible polyurethane foams, by reaction of
component E containing at least one poly(oxyalkylene) polyol obtainable by a process according to any of Claims 1 to 10 (component E1),
F optionally
F1) catalysts and/or
F2) auxiliary and additive substances,
G water and/or physical blowing agents,
with
H di- and/or polyisocyanates,
wherein production is carried out at an index of ≥ 90 to ≤ 120.

14. Process for the production of polyurethane foams, preferably flexible polyurethane foams, according to Claim 13, by reaction of
E1 ≥ 20 to ≤ 100 parts by weight, preferably from ≥ 40 to ≤ 100 parts by weight, of at least one poly(oxyalkylene) polyol obtainable by a process according to any of Claims 1 to 10 (component E1) and has hydroxyl numbers according to DIN 53240 of ≥ 20 mg KOH/g to ≤ 130 mg KOH/g,
E2 ≤ 80 to ≥ 0 parts by weight, preferably from ≤ 60 to ≥ 0 parts by weight, of at least one poly(oxyalkylene) polyol which has hydroxyl numbers according to DIN 53240 of ≥ 20 mg KOH/g to ≤ 130 mg KOH/g and does not fall under the definition of the component E1,
E3 ≤ 50 to ≥ 0 parts by weight, based on the sum of the parts by weight of the components E1 and E2, of at least one compound having isocyanate-reactive groups which does not fall under the definition of the component E1 or E2,
F optionally
F1) catalysts and/or
F2) auxiliary and additive substances,
G water and/or physical blowing agents,
with
H di- and/or polyisocyanates,
wherein production is carried out at an index of ≥ 90 to ≤ 120 and wherein the parts by weight of E1 + E2 in the composition sum to 100 parts by weight.

15. Process for the production of polyurethane foams, preferably flexible polyurethane foams, by reaction of
component E containing at least one poly(oxyalkylene) polyol obtainable by a process according to any of Claims 1 to 10 (component E1) and at least one poly(oxyalkylene) polyol which has not been produced using phosphorus-containing compounds (component E2),
F optionally
F1) catalysts and/or
F2) auxiliary and additive substances,
G water and/or physical blowing agents,
with
H di- and/or polyisocyanates,
wherein production is carried out at an index of ≥ 90 to ≤ 120.

16. Process for the production of polyurethane foams, preferably flexible polyurethane foams, according to Claim 15, by reaction of
E1 ≥ 20 to < 100 parts by weight, preferably ≥ 40 to < 100 parts by weight, of at least one poly(oxyalkylene) polyol obtainable by a process according to any of Claims 1 to 10 (component E1) and having hydroxyl numbers according to DIN 53240 of ≥ 20 mg KOH/g to ≤ 130 mg KOH/g,
E2 ≤ 80 to > 0 parts by weight, preferably from ≤ 60 to > 0 parts by weight, of at least one poly(oxyalkylene) polyol which has hydroxyl numbers according to DIN 53240 of ≥ 20 mg KOH/g to ≤ 130 mg KOH/g and has not been produced **using phosphorus-containing compounds,**
E3 ≤ 50 to ≥ 0 parts by weight, based on the sum of the parts by weight of the components E1 and E2, of at least one compound having isocyanate-reactive groups which does not fall under the definition of the component E1 or E2,
F optionally
F1) catalysts and/or
F2) auxiliary and additive substances,
G water and/or physical blowing agents,
with
H di- and/or polyisocyanates,
wherein production is carried out at an index of ≥ 90 to ≤ 120 and wherein the parts by weight of E1 + E2 in the composition sum to 100 parts by weight.

17. Polyurethane foams, preferably flexible polyurethane foams, obtainable by a process according to any of Claims 13 to 16.

18. Use of the polyurethane foams according to Claim 17 for the production of furniture upholstery, textile inserts, mattresses, automotive seats, headrests, armrests, sponges, foam films for use in automotive parts such as headliners, door trims, seat cushions and component parts.

## Revendications

1. Procédé pour la préparation de polyoxyalkylène polyols, où tout d'abord dans une première étape A)
i) au moins un composé contenant du phosphore comportant au moins un groupe hydroxyle,
ou
ii) un mélange d'au moins un composé contenant du phosphore, présentant au moins un groupe hydroxyle avec au moins un composé de départ fonctionnalisé par H, la proportion des composés de départ fonctionnalisés par H dans le mélange étant de maximum 50 % en poids,
est mis à réagir avec
B) un composant de type oxyde d'alkylène, comprenant :
i) ≥ 50 à ≤ 100 % en poids d'oxyde d'éthylène et
ii) ≥ 0 à ≤ 50 % en poids d'autres oxydes d'alkylène que l'oxyde d'éthylène,
et le produit obtenu de la première étape est ensuite transformé sous catalyse DMC avec
C) un composant de type oxyde d'alkylène, comprenant :
i) ≥ 0 à ≤ 25 % en poids d'oxyde d'éthylène et
ii) ≥ 75 à ≤ 100 % en poids d'autres oxydes d'alkylène que l'oxyde d'éthylène et
D) éventuellement du dioxyde de carbone,
où, dans la première étape de procédé, le rapport molaire du composant (B) aux groupes hydroxyle du composant (A) est de 1:1 à 8:1.

2. Procédé selon la revendication 1, où, en tant que composés contenant du phosphore comportant au moins un groupe hydroxyle (composant (A)i)),
a) des composés sont utilisés, qui peuvent être représentés par la formule suivante 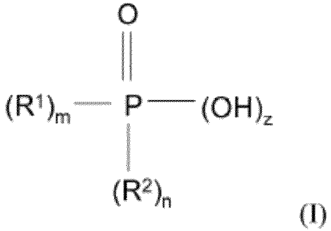 ce qui suit s'appliquant :
z = un nombre entier de 1 à 3,
n = 0 ou 1,
m = 0 ou 1 et
z + m + n = 3,
et R¹ et R² étant identiques ou différents l'un de l'autre et représentant
i) -H
ii) -P (O) (OH)₂
iii) des radicaux liés au phosphore par l'intermédiaire d'un atome de C, saturés ou insaturés, linéaires ou ramifiés, aliphatiques ou cycloaliphatiques ou éventuellement aromatiques substitués ou araliphatiques, comportant jusqu'à 10 atomes de carbone, qui contiennent éventuellement des hétéroatomes de la série oxygène, soufre et azote,
iv) -OR³ ou -OC(O)R⁴, R³ respectivement R⁴ représentant des radicaux saturés ou insaturés, linéaires ou ramifiés, aliphatiques ou cycloaliphatiques ou éventuellement aromatiques substitués ou araliphatiques, comportant jusqu'à 10 atomes de carbone, qui contiennent éventuellement des hétéroatomes de la série oxygène, soufre et azote,
et/ou
b) des oligomères et/ou des polymères de chacun des composés mentionnés en a), présentant au moins un groupe hydroxyle, pouvant être obtenus par condensation, sont utilisés, lesquels peuvent être des condensats d'un seul composé, mais aussi des condensats mixtes et les oligomères respectivement les polymères pouvant présenter des structures linéaires, ramifiées ou cycliques.

3. Procédé selon la revendication 2, les composés mentionnés en a) étant des acides phosphoriques, des acides phosphoniques (acides phosphoneux) des acides phosphiniques, des acides pyrophosphoriques (acides diphosphoriques), des acides diphosphoniques, des acides polyphosphoriques et polyphosphoniques, comme par exemple des acides tripolyphosphoriques ou tripolyphosphoniques, des acides tétrapolyphosphoriques ou tétrapolyphosphoniques, des acides trimétaphosphoriques ou tétramétaphosphoriques, des acides hypodiphosphoriques ou des esters de chacun de ces composés.

4. Procédé selon l'une quelconque des revendications 1 à 3, le composant A comprenant de l'acide phosphorique à 100 % (composant A) i)), de l'acide phosphorique à 85 % (composant A) ii)) ou un mélange d'acide phosphorique à 85 % et d'au moins un composé de départ fonctionnalisé par H supplémentaire (composant A) ii)).

5. Procédé selon l'une quelconque des revendications 1 à 4, le composant B contenant ≥ 80 % en poids, préférablement ≥ 90 % en poids, particulièrement préférablement 100 % en poids d'oxyde d'éthylène.

6. Procédé selon l'une quelconque des revendications 1 à 5, où dans la première étape de procédé le rapport molaire du composant (B) aux groupes hydroxyle du composant (A) étant de 2:1 à 5:1.

7. Procédé selon l'une quelconque des revendications 1 à 6, la première étape de procédé étant mise en œuvre
i) sans un catalyseur catalysant la réaction d'alcoxylation ou
ii) avec utilisation d'un catalyseur catalysant la réaction d'alcoxylation, excepté un catalyseur DMC.

8. Procédé selon l'une quelconque des revendications 1 à 7, ≥ 85 % en poids, particulièrement préférablement ≥ 90 % en poids d'autres oxydes d'alkylène que l'oxyde d'éthylène dans le composant C) ii) étant utilisés dans la deuxième étape de procédé.

9. Procédé selon l'une quelconque des revendications 1 à 8, le composant B) ii) et/ou le composant C) ii) indépendamment l'un de l'autre comprenant un ou plusieurs composés choisis dans le groupe constitué par l'oxyde de propylène, l'oxyde de 1-butène, l'oxyde de 2,3-butène, l'oxyde de 2-méthyl-1,2-propène (oxyde d'isobutène), l'oxyde de 1-pentène, l'oxyde de 2,3-pentène, l'oxyde de 2-méthyl-1,2-butène, l'oxyde de 3-méthyl-1,2-butène, l'oxyde de 1-hexène, l'oxyde de 2,3-hexène, l'oxyde de 3,4-hexène, l'oxyde de 2-méthyl-1,2-pentène, l'oxyde de 4-méthyl-1,2-pentène, l'oxyde de 2-éthyl-1,2-butène, l'oxyde de 1-heptène, l'oxyde de 1-octène, l'oxyde de 1-nonène, l'oxyde de 1-décène, l'oxyde de 1-undécène, l'oxyde de 1-dodécène, l'oxyde de 4-méthyl-1,2-pentène, le monoxyde de butadiène, le monoxyde d'isoprène, l'oxyde de cyclopentène, l'oxyde de cyclohexène, l'oxyde de cycloheptène, l'oxyde de cyclooctène, l'oxyde de styrène, l'oxyde de méthylstyrène, l'oxyde de pinène, une ou plusieurs graisses époxydée en tant que monoglycérides, diglycérides et triglycérides, des acides gras époxydés, des esters en C₁₋₂₄ d'acides gras époxydés, l'épichlorhydrine, le glycidol, et des dérivés du glycidol, comme par exemple le méthylglycidyléther, l'éthylglycidyléther, le 2-éthylhexylglycidyléther, l'allylglycidyléther, le (méth)acrylate de glycidyle ainsi que des alcoxysilanes fonctionnalisés par époxyde, comme par exemple le 3-glycidyloxypropyltriméthoxysilane, le 3-glycidyloxypropyltriéthoxysilane, le 3-glycidyloxypropyltripropoxysilane, le 3-glycidyloxypropyl-méthyl-diméthoxysilane, le 3-glycidyloxypropyléthyldiéthoxysilane, le 3-glycidyloxypropyltriisopropoxysilane.

10. Procédé selon l'une quelconque des revendications 1 à 9, où dans la deuxième étape de procédé le rapport molaire du composant (C) aux groupes hydroxyle du produit de l'étape 1 est de 5 à 30:1, préférablement de 10 à 20:1.

11. Polyoxyalkylène polyols pouvant être obtenus par un procédé selon l'une quelconque des revendications 1 à 10.

12. Utilisation des polyoxyalkylène polyols pouvant être obtenus par le procédé selon l'invention pour la préparation de mousses de polyuréthane, préférablement de mousses souples de polyuréthane.

13. Procédé pour la préparation de mousses de polyuréthane, de préférence de mousses souples de polyuréthane, par la transformation
d'un composant E contenant au moins un polyoxyalkylène polyol, pouvant être obtenu par un procédé selon l'une quelconque des revendications 1 à 10 (composant E1),
F éventuellement
F1) des catalyseurs et/ou
F2) des auxiliaires et des additifs,
G de l'eau et/ou des agents propulseurs physiques,
avec
H des diisocyanates et/ou des polyisocyanates,
la préparation ayant lieu à un indice de ≥ 90 à ≤ 120.

14. Procédé pour la préparation de mousses de polyuréthane, de préférence de mousses souples de polyuréthane, selon la revendication 13, par transformation de
E1 ≥ 20 à ≤ 100 parties en poids, de préférence ≥ 40 à ≤ 100 parties en poids d'au moins un polyoxyalkylène polyol, pouvant être obtenu par un procédé selon l'une quelconque des revendications 1 à 10 (composant E1), et présente des indices d'hydroxyle selon la norme DIN 53240 de ≥ 20 mg de KOH/g à ≤ 130 mg de KOH/g,
E2 ≤ 80 à ≥ 0 parties en poids, de préférence ≤ 60 à ≥ 0 parties en poids d'au moins un polyoxyalkylène polyol, qui présente des indices d'hydroxyle selon la norme DIN 53240 de ≥ 20 mg de KOH/g à ≤ 130 mg de KOH/g et qui ne relève pas de la définition du composant E1,
E3 ≤ 50 à ≥ 0 parties en poids, par rapport à la somme des parties en poids des composants E1 et E2, d'au moins un composé présentant des groupes réactifs vis-à-vis d'isocyanates, qui ne relève pas de la définition des composants E1 ou E2,
F éventuellement
F1) des catalyseurs et/ou
F2) des auxiliaires et des additifs,
G de l'eau et/ou des agents propulseurs physiques,
avec
H des diisocyanates et/ou des polyisocyanates,
la préparation ayant lieu à un indice de ≥ 90 à ≤ 120 et la sommes des parties en poids E1 + E2 dans la composition donnant 100 parties en poids.

15. Procédé pour la préparation de mousses de polyuréthane, de préférence de mousses souples de polyuréthane, par la transformation
d'un composant E contenant au moins un polyoxyalkylène polyol, qui peut être obtenu par un procédé selon l'une quelconque des revendications 1 à 10 (composant E1), ainsi qu'au moins un polyoxyalkylène polyol, qui n'a pas été préparé avec utilisation de composés contenant du phosphore (composant E2),
F éventuellement
F1) des catalyseurs et/ou
F2) des auxiliaires et des additifs,
G de l'eau et/ou des agents propulseurs physiques,
avec
H des diisocyanates et/ou des polyisocyanates,
la préparation ayant lieu à un indice de ≥ 90 à ≤ 120.

16. Procédé pour la préparation de mousses de polyuréthane, de préférence de mousses souples de polyuréthane, selon la revendication 15, par la transformation de
E1 ≥ 20 à < 100 parties en poids, de préférence ≥ 40 à < 100 parties en poids d'au moins un polyoxyalkylène polyol, lequel peut être obtenu par un procédé selon l'une quelconque des revendications 1 à 10 (composant E1), et présente des indices d'hydroxyle selon la norme DIN 53240 de ≥ 20 mg de KOH/g à ≤ 130 mg de KOH/g,
E2 ≤ 80 à > 0 parties en poids, de préférence ≤ 60 à > 0 parties en poids d'au moins un polyoxyalkylène polyol, qui présente des indices d'hydroxyle selon la norme DIN 53240 de ≥ 20 mg de KOH/g à ≤ 130 mg de KOH/g et qui n'a pas été préparé avec utilisation de composés contenant du phosphore,
E3 ≤ 50 à ≥ 0 parties en poids, par rapport à la somme des parties en poids des composants E1 et E2, d'au moins un composé présentant des groupes réactifs vis-à-vis d'isocyanates, qui ne relève pas de la définition du composant E1 ou E2,
F éventuellement
F1) des catalyseurs et/ou
F2) des auxiliaires et des additifs,
G de l'eau et/ou des agents propulseurs physiques,
avec
H des diisocyanates et/ou des polyisocyanates,
la préparation ayant lieu à un indice de ≥ 90 à ≤ 120 et la somme des parties en poids E1 + E2 dans la composition donnant 100 parties en poids.

17. Mousses de polyuréthane, de préférence mousses souples de polyuréthane, pouvant être obtenues par un procédé selon l'une quelconque des revendications 13 à 16.

18. Utilisation de mousses de polyuréthane selon la revendication 17 pour la préparation de rembourrages de meubles, de carcasses textiles, de matelas, de sièges automobiles, d'appuis-tête, d'accoudoirs, d'épongés, de feuilles de mousse pour une utilisation dans des éléments automobiles comme par exemple des pavillons, des habillages de portes latérales, des coussins de sièges et des composants.
